# EUROPEAN PATENT APPLICATION

(11) **EP 3 670 736 A1**
(43) Date of publication of application: **24.06.2020**
(21) Application number: 18215124.1
(22) Date of filing: 21.12.2018
(51) Int. Cl.: D06F 75/14, B01J 47/024

(54) **IRON WITH WATER SOFTENER**

(71) Applicant: Aktiebolaget Electrolux, 105 45 Stockholm (SE)
(72) Inventor: ROHMER, Karolin, 90429 Nürnberg (DE); LI, Myn, 105 45 Stockholm (SE); HAN YUGUANG, Dennis, 105 45 Stockholm (SE)
(74) Representative: Electrolux Group Patents

(57) **Abstract**

The invention relates to a steam iron (10) comprising a water tank (18). The steam iron is configured to receive a stick (20) insertable into a fixed position in the water tank, wherein, the stick is configured to contain a substance for softening water in the water tank. Hereby water in the water tank ca be softened in an easy manner and with little interaction required by a user.

## Description

### TECHNICAL FIELD

The invention relates to a steam iron for ironing clothes and other textiles. In particular the invention relates to a steam iron provided with a water softener.

### BACKGROUND

In steam irons, water from a water tank is heated to produce steam. Depending on the water used in the water tank lime scale can be produced. Thus, when hard water is used, i.e. water that has high mineral content (in contrast with "soft water") lime scale is likely to be produced. Hard water is formed when water percolates through deposits of limestone and chalk which are largely made up of calcium and magnesium carbonates. The water can form and deposit of lime scale in the steam iron. Thus, lime scale can comprise a deposit consisting essentially of calcium carbonate (CaCO₃) that forms solid particles or coatings in diverse places on metal, ceramic, or plastic surfaces that are in contact with water, and which can diminish the performance of the steam iron. The lime scale can lead to premature aging of certain parts, thus shortening the useful life of the stream iron, or can create particles that are bothersome to consumers.

Generally, two types of solutions exist to eliminate or reduce the problem of formation of lime scale in a steam iron.

In accordance with first type of solution, the steam distribution circuit comprises a filter designed to retain lime scale particles transported by the steam flow. Such an iron retains the lime scale particles and thus preventing them from being discharged via the steam outlet holes of the soleplate and staining the laundry. Such solution with a function to remove lime scale particles is for example described in US9856598.

In accordance with a second type of solution, the water hardiness of the water is softened. In such solutions a substance, typically an acid, is added to the water in the water container to inhibit the formation and deposition of lime scale in a steam iron. Also, US2017044038 describes a system where a biodegradable and water-soluble scale-inhibiting agent is added to the coldwater tank of a steam iron.

However, all the solutions described above requires a high level of user-interaction and/or requires the user to handle chemical substances. Hence, there is a need for a steam iron that, at least partly remedies these disadvantages.

Also, there is a constant desire to improve irons. Hence, there exists a need for an improved iron, in particular an improved steam iron.

### SUMMARY

It is an object of the present invention to provide an improved iron. In particular, it is an object to improve the user interface of an iron.

These objects and or others are obtained by an iron as set out in the appended claims.

In accordance with a first aspect of the invention a steam iron is provided. The steam iron comprises a water tank. The steam iron is configured to receive a stick insertable into a fixed position in the water tank, wherein, the stick is configured to comprise a substance for softening water in the water tank. Hereby water in the water tank ca be softened in an easy manner and with little interaction required by a user.

In accordance with one embodiment the stick is insertable via an opening in the steam iron to the water tank. The opening also constitutes a water inlet for filling water into the water tank. Hereby only one opening to the water tank is required in that the stick can be inserted in an opening where water is refilled

In accordance with one embodiment the opening is provided at the backside of the steam iron. Hereby the opening can be located at a position which is easy to access and which makes it possible to place the stick essentially horizontally into the water tank.

In accordance with one embodiment the stick, when inserted, is configured be located at the bottom of the water tank. Hereby water can be softened even when there is a little amount of water in the water tank.

In accordance with one embodiment, the stick is provided with a cover having through holes. Hereby a structure for the stick is provided that enables water to pass through a cover to a substance that can be placed inside the cover.

In accordance with one embodiment 6 through holes are located all around the cover. Hereby flow of water through the stick is facilitated. Also, the orientation of the stick inside the water tank becomes of less relevance making it easier to correctly place the stick inside the water tank.

In accordance with one embodiment the stick has a generally cylindrical shape. Hereby a shape that is favorable for fitting in a locked state inside the water tank is provided. Also, water can be made to easy pass through a stick being cylindrical.

In accordance with one embodiment, the stick is at least 5 cm long. Hereby a stick having a sufficient size is provided. The size allows for less frequent replacement/refilling of the stick whereby less user interaction is required for keeping the water softened.

In accordance with a second aspect of the invention a stick comprising a substance for softening water in a water tank of a steam iron, the stick being configured to be fixed inside the water tank is provided. Hereby an easy to replace/refill mechanism for softening water in a steam iron is provided. The stick is easy to use and facilitates user interaction.

In accordance with one embodiment the stick is provided with a fixation part for fixing the stick inside the water tank. Hereby the stick can be easily locked into a fixed position inside the water tank. For example, the fixation part can be configured to engage in a snap fit with a structure in the water tank.

In accordance with some embodiments the stick can provided with a cover having through holes. The through holes can be located all around the cover. The stick can have a generally cylindrical shape. The stick can be at least 5 cm long.

By providing a steam iron and a stick in accordance with the above steam iron performance can be improved, but also lifetime prolongation of the steam iron is achieved with a small ecological footprint.

### BRIEF DESCRIPTION OF THE DRAWINGS

The invention will now be described in more detail, by way of example, and with reference to the accompanying drawings, in which:
Fig. 1 is a perspective side view of a steam iron,
Fig. 2 is a cross sectional view of a steam iron,
Figs. 3 and 4 show the steam iron from the backside.
Fig. 5 is a view of a stick for insertion into a water tank of a steam iron, and
Fig. 6 is a cross sectional view of the stick in Fig. 5.

### DETAILED DESCRIPTION

The invention will now be described more fully hereinafter with reference to the accompanying drawings, in which certain embodiments of the invention are shown. The invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like or similar components of different embodiments can be exchanged between different embodiments. Some components can be omitted from different embodiments. Like numbers refer to like elements throughout the description.

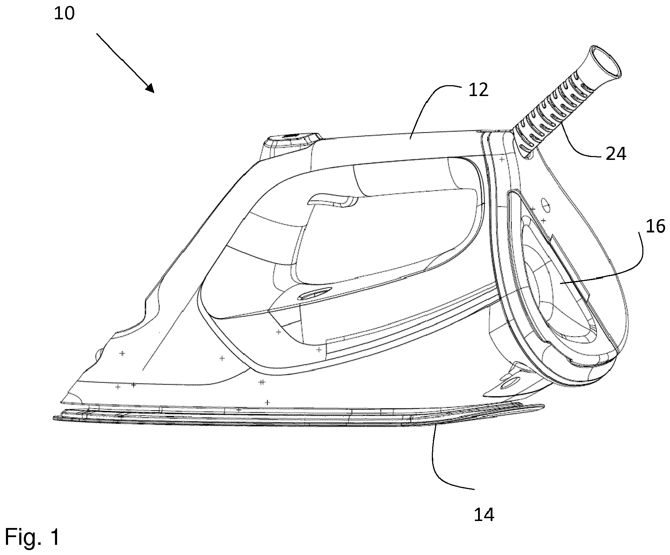

In Fig. 1, a side view of an iron 10 is depicted. The iron 10 can typically be a steam iron wherein steam from a water tank can be heated and released. The iron 10 comprises a handle 12 and a heatable soleplate 14. The handle 12 is used by a user for holding the iron 10 when using the iron 10. The heatable soleplate 14 can be heated by a heater located in the iron to a temperature set by a user using a control. Typically, steam can be released via openings in the sole plate 14. The iron 10 can be supplied with power via a cord 24.

The iron 10 can further be provided with a back side opening 16. The back side opening 16 provides access to a water tank inside the steam iron. The backside opening 16 can be used to fill water to the water tank and also be used as an access opening to place a stick into the water tank as will be described in more detail below.

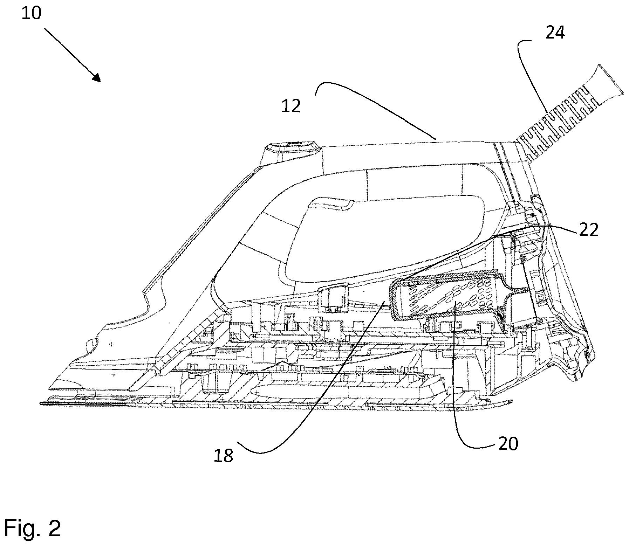

In Fig. 2, a cross-sectional view of the steam iron 10 is shown. The steam iron 10 comprises a water tank 18 wherein water for steam generation can be contained. Inside the water tank 18 a stick 20 can be placed. The stick 20 can be fixed inside water tank 18. Hereby a stick can be inserted into a fixed position in the water tank. The stick 20 can be configured to contain a substance for softening water in the water tank. In this manner a water softening substance can be placed in the water tank to soften water contained in the water tank 18. The stick can be easily removed when it is time to refill or replace the stick. Also, by having the stick in a fixed position, it can be ensured that the stick is also always at a desired position within the water tank 18. For example, the stick can be placed with at least a part of the stick along the bottom side of the water tank so that the stick is configured be located at the bottom of the water tank. In this way, water will always come into contact with the stick when the steam iron is in use in a horizontal position.

In accordance with some embodiments a stick holder 22 is provided for fixating the stick 20 when placed inside the water tank 18. The stick holder 22 can be configured to operate in some suitable manner to enable the stick to be fixed in a locked position inside the water tank 18. For example, the stick holder can be configured to operate in a snap-fit lock with the stick 20. In accordance with another embodiment the stick holder 22 can be configured to receive the stick using a screw mechanism whereby the stick can be screwed into a locked position in the stick holder 22. In yet another embodiment the stick holder can be configured to clamp the stick into a locked position by clamping the stick towards a closed lid of the opening 16. Further a controller circuitry for controlling different functions of the steam iron 10. The controller circuitry formed by a controller (not shown). The controller is configured to set different parameters of the iron in accordance with user input. Parameters that can be set are, for example, temperature of the soleplate and amount of steam provided by a steam iron 10. Also, the controller can provide a timer for timing the use of steam or some other parameter related to use of water in the water tank. Hereby a user can be made aware when it is time to refill or replace the stick 20.

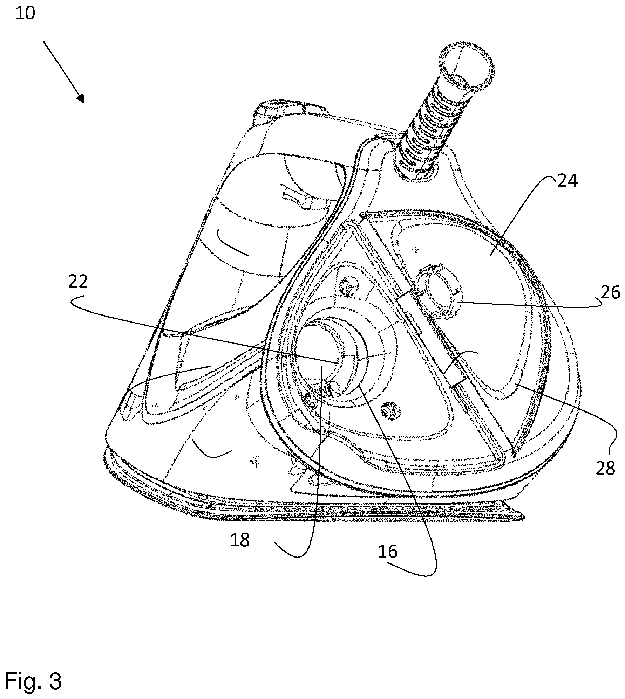

In Fig. 3 a backside view of the steam iron 10 is shown. Fig. 3 shows the steam iron 10 with the opening 16 The opening 16 can be accessed by opening a lid 24 which is shown in an open position in Fig. 3. The lid 24 can be provided with a support 26 on the inside of the lid 24. The support 26 can in accordance with some exemplary embodiments act to clamp the stick 20 in a locked position inside the water tank 18. Thus, when a stick is placed in the water tank via the opening 16, the support 26 will in some embodiments contribute to hold the stick in a fixed position inside the water tank. Further, the lid 24 can be provided with a sealing 28. The sealing 28 can seal the opening when the lid is in a closed position so that water is safely contained inside the water tank when the lid 24 is closed.

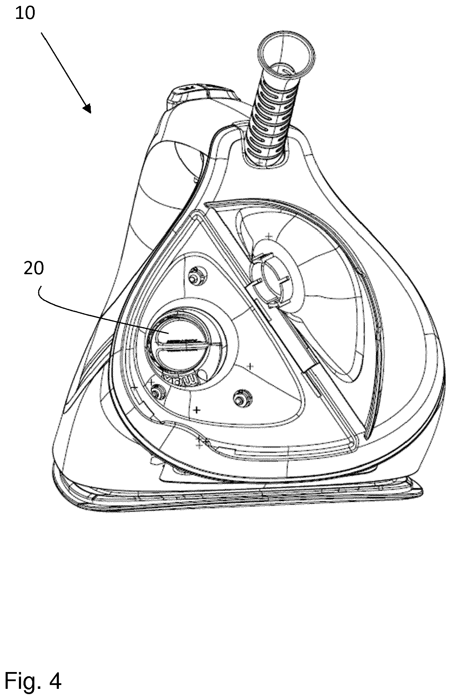

Fig. 4 is a view similar to Fig. 3. In Fig. 4 a stick 20 is inserted into the water tank.

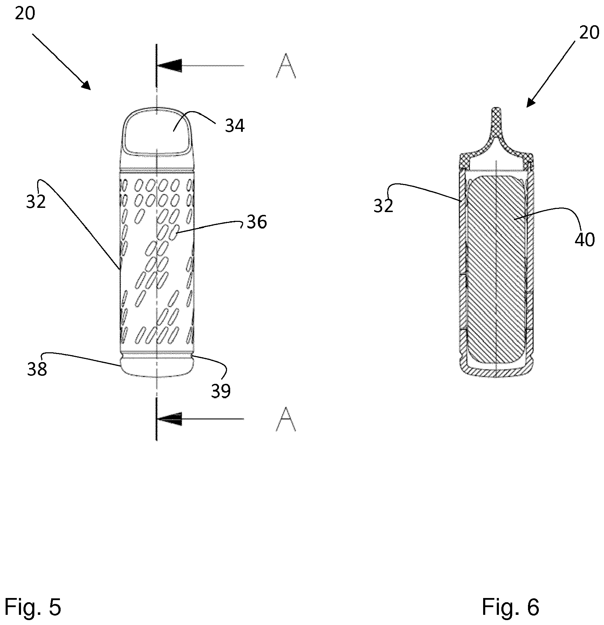

In Fig. 5 a view of the stick 20 is depicted. The stick 20 can have a cover 32. The cover 32 can have trough holes 36 to allow water to pass through the stick 20. The trough holes can be round such as oval or circular and can in accordance with some embodiments be provided all around the stick 20. Further, a grip 34 can be provided at an end section of the stick to facilitate removing and placing the stick inside the water tank. a cover having through holes. At the end opposing the grip 34 a fixation part 38 can be located. The fixation part can be provided to cooperate with the stick holder 22 as described above for holding the stick in a fixed position inside the water tank. In accordance with some embodiments the fixation part 38 comprises an indentation 39 that can cooperate with the stick holder in a snap fit configuration where by the stick can be snap-fit into the water tank. In accordance with another embodiment the fixation part can comprise a threading that can cooperate with the stick holder to screw the stick into the stick holder. The stick 20 can have a generally cylindrical shape. The length of the stick can be about 3-10 cm and the width can be about 1-4 cm, in particular about 2 cm. The length can typically be at least 5 cm to ensure that enough water can passes through the stick and also so that the volume of the stick is large enough to contain a suitable amount of water softening substance.

In Fig. 6 a cross-sectional view along the section A-A of Fig. 5 is shown. As can be seen a water softening substance 40 is located inside the cover 32 of the stick 20. The softening substance can be refilled when used. Hereby the waste is reduced. The controller can keep track of the time used and remind the user when it is time to refill or replace the stick to ensure that there is always a substance to soften water in the stick 20. The substance in the stick can be any suitable substance for softening water.

In the embodiments described above, the water tank is accessed via an opening in the back side of the steam iron. However, it is also envisaged that the access to the water tank can be provided at any location in the steam iron. For example, the opening can be provided in the front of the steam iron or some other suitable location. Also, in the embodiments described herein, there is a single opening provided to access the water tank, so that water is filled into the water tank via the same opening as the stick is placed in the water tank. However, it is also possible to provide multiple openings to access the water tank. For example, a separate opening for filling water and a separate opening to place the stick into the water tank can be provided.

Further, the stick is shown in a generally cylindrical shape. However, the stick can have any shape allowing the stick to be placed in a fixed position inside the water tank.

## Claims

1. A steam iron (10) comprising a water tank (18), the steam iron being configured to receive
- a stick (20) comprising a substance (40) for softening water in the water tank insertable into a fixed position in the water tank.

2. The steam iron according to claim 1, wherein the stick is insertable via an opening (16) in the steam iron to the water tank, said opening also constituting a water inlet for filling water into the water tank.

3. The steam iron according to claim 1 or 2, wherein the opening is provided at the backside of the steam iron.

4. The steam iron according to anyone of claims 1 - 3, wherein the stick, when inserted, is configured be located at the bottom of the water tank.

5. The steam iron according to anyone of claims 4, wherein the stick is provided with a cover (32) having through holes (36).

6. The steam iron according to claim 5, wherein through holes are located all around the cover.

7. The steam iron according to anyone of claims 4 - 6, wherein the stick has a generally cylindrical shape.

8. The steam iron according to anyone of claims 4 - 7, wherein the stick is at least 5 cm long.

9. A stick (20) comprising a substance (40) for softening water in a water tank of a steam iron, the stick being configured to be fixed inside the water tank.

10. The stick according to claim 9 wherein the stick is provided with a fixation part (38) for fixing the stick inside the water tank.

11. The stick according to claim 10, wherein the fixation part is configured to engage in a snap fit.

12. The stick according to anyone of claims 9 - 11, wherein the stick is provided with a cover (32) having through holes (36).

13. The stick according to claim 12, wherein through holes are located all around the cover.

14. The stick according to anyone of claims 9 - 13, wherein the stick has a generally cylindrical shape.

15. The stick according to anyone of claims 9 - 14, wherein the stick is at least 5 cm long.
